# EUROPEAN PATENT APPLICATION

(11) **EP 2 568 471 A1**
(43) Date of publication of application: **13.03.2013**
(21) Application number: 11306132.9
(22) Date of filing: 12.09.2011
(51) Int. Cl.: G11B 20/10, G11B 27/00, H04N 5/783

(54) **A method for playing multimedia content, a related system and related playback module**

(71) Applicant: Alcatel Lucent, 75007 Paris (FR)
(72) Inventor: MAMPAEY, Marcel, 1090 Brussels (BE)
(74) Representative: ALU Antw Patent Attorneys

(57) **Abstract**

The present invention relates to a method, a related system and a related playback module for playing multimedia content from a Multimedia content Source wherein first an audio signal is extracted from the Multimedia content provided by the Multimedia content source and subsequently the audio signal extracted by the extracting means is amplified.

The method further includes the steps of controlling the playing of the multimedia content, generating an audio replacement signal and switching between the audio signal extracted from said multimedia content and the audio replacement signal in case of controlling the playing of the multimedia content, where the switching between the audio signal extracted from the multimedia content to the audio replacement signal is executed before the actual controlling of the playing of said multimedia content.

## Description

The present invention relates to a Method for playing multimedia content as described in the preamble of claim 1, the Multimedia content playback system as described in the preamble of claim 5.

Such Multimedia content playback systems already are well known in the art. Usually, such Multimedia content playback system includes a Multimedia content playback device for playing multimedia content and a coupled Audio Signal Amplifier, like a home cinema system, for amplifying the audio signal received from the Multimedia content playback device.

Such Multimedia content playback device may be a DVD-player, Blu-Ray disc player, a Game station, a PC, a Media Player, a Set Top Box, a TV, etc. accessible directly or through the home network, as well as content sources from air broadcast like DVB-T, SAT or from the network Cable, or DSL, be it from IPTV or over the Internet like Over The Top with Web TV applications.

These Multimedia content playback devices are able to provide consumers with access to a multiplicity of multimedia content assets, i.e. video sources like movies and TV programs.

More and more users browse through such multimedia content using menus like an Electronic Program Guide, recommendation engines menus, and Web pages designed for TV viewing.

As a consequence of frequent changing of menu and multimedia content browsing, the audio signal at the output of such a Multimedia content playback device will be interrupted when going from one multimedia content or menu to another.

If such coupled audio signal amplifier receives no sound, it first deactivates a multi-channel sound decoder, and subsequently activates the automatic detection mode. At occurrence of this deactivation of a multi-channel sound decoder, and subsequent activation of the automatic detection mode, the sound at the output of the audio signal amplifier can be interrupted for a long time and in addition a parasite sound may be played and amplified at the output thereof, which can be very unpleasant for the users, especially if the volume of the amplifier is high.

In addition, a short period after presence of a new audio signal at the output of the Multimedia content playback device this audio signal may not occur at the output of the audio signal amplifier, content may not be provided as the amplifier is still mute in auto-detection mode for a few seconds. Hence, during change of multimedia content or trick play action the audio signal at the output of a Multimedia content playback device is interrupted causing an even longer audio interrupt at an output of an audio signal amplifier being troublesome for an audience.

An objective of the present invention is to provide a method for Multimedia content playback, a related system of the above known type but wherein the switching between multimedia content assets and trick play actions does not induce audio interrupts.

According to the present invention, this object is achieved by the method according to claim 1, a related system as described in claim 5, a related multimedia playback module as described in claim 9, the related Play back device as described in claim 13 and the internet website as described in claim 14.

Indeed, by first generating an audio replacement signal and by switching between the audio signal that is extracted from the multimedia content and the generated audio replacement signal at instructing the switching means to switch from the audio signal that is extracted from the multimedia content to the audio replacement signal before actually controlling the playing of the multimedia content it is prevented that due to the fact that the playing of the multimedia content is discontinued, either due to a switch from a first to a second multimedia asset or due to trick play of the multimedia content, and consequentially the generated audio signal is discontinued, instead a generated audio replacement signal is selected by the switching means for outputting to an output of the switching means.

Hence during the period no valid audio signal extracted from a multimedia content is present, an alternative audio signal being the audio replacement signal is provided at the output of the switching means, that is coupled to an amplifying device, no delay due to checking the format of the audio signal and finding a corresponding decoder or delay due to the auto signal detection is induced.

Controlling the playing of the multimedia includes switching between multimedia assets and executing trick-play on multimedia content.

Another characteristic feature of the present invention is disclosed in claim 2, 6 and 10.

As the Extracting Means in addition to extracting an audio signal from the multimedia content is able to provide the control means with an indication signal acknowledging that the audio signal which is extracted from the multimedia content is present again, the_control means is enabled to instruct the switching means to subsequently switch back from the audio replacement signal to the audio signal extracted from the multimedia content at receipt of the indication signal, there is at all times an audio signal present at the output of the switching means and consequently at the coupled output of a multimedia playback device.

Hence no delay due to checking the format of the audio signal and finding a corresponding decoder or delay due to the auto signal detection is induced at a coupled audio signal amplifier as there is at all times an audio signal present.

A further characteristic feature of the present invention is disclosed in claim 3, 7 and 11.

The controlling means is adapted to execute trick play functionality, i.e. pause, slow-motion, fast forward or rewind of a multimedia content and is further adapted to switch between a plurality of multimedia contents where an Electronic Program Guide available on IPTV systems or alternative menu structures may be used.

Still a further characteristic feature of the present invention is disclosed in claim 4, 8 and 12.

The audio signal content of the audio replacement signal can be predefined. The replacement signal to be played can be prerecorded music, a near silent sound or nature sounds like waves, rain, wind, etc., configurable by the user or based on a user profile and status, as long as this guarantees sound continuity on the device audio outs.

The sound content of the audio replacement signal is configurable: e.g. the audio replacement signal includes background nature sounds selection and volume.

The format of the audio replacement signal can be e.g. AAC or Dolby Digital or DTS, and can be determined according to the audio format of the audio signal extracted from the multimedia content.

Further characterizing embodiments of the present System for playing multimedia content are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a system for playing multimedia content according to the present invention.
Fig. 2 represents the functional structure of a Multimedia playback module according to the present invention.

In the following paragraphs, referring to the drawings, an implementation of the system for playing multimedia content from a Multimedia Content Source MCS according to the present invention will be described.

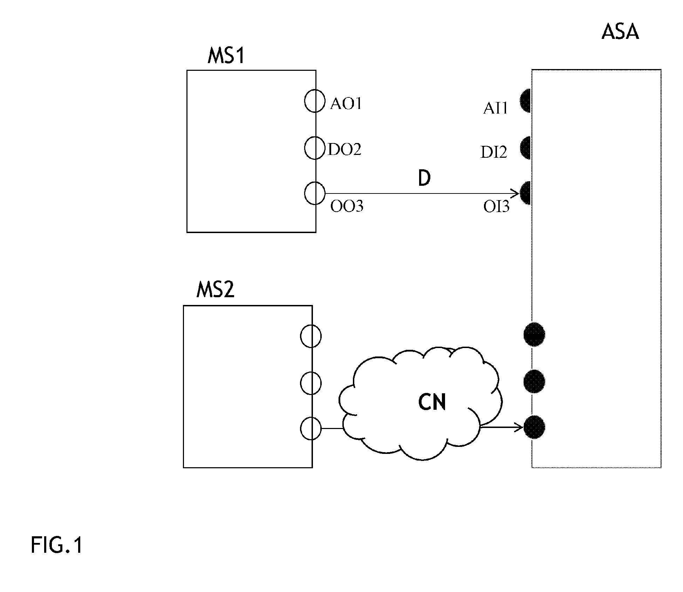

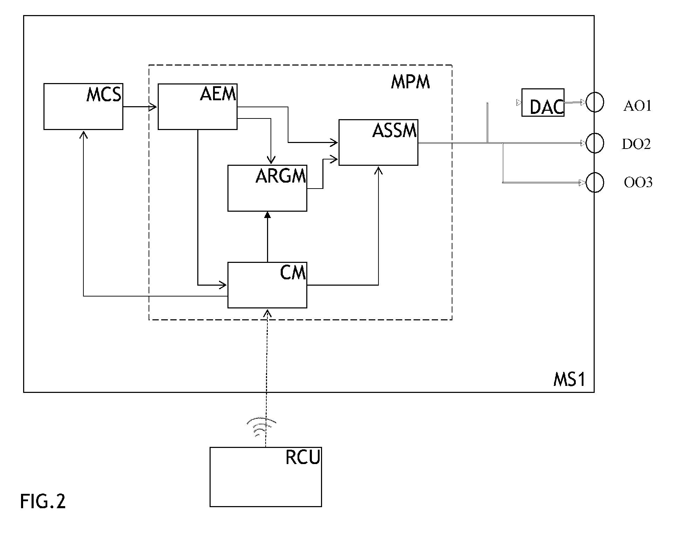

In the first paragraph of this description the main elements of this system with its functional parts as presented in respective figures, FIG. 1 and FIG. 2 are described. In the second paragraph, all connections between the before mentioned network elements and described functional parts are defined. In the succeeding paragraph the actual execution of the Multimedia content asset exchange method is described.

The essential elements of this embodiment of the present invention, as presented in FIG.1, are multimedia playback devices MS1, MS2 and a coupled audio signal amplifier ASA.

Each of the multimedia playback devices MS1, MS2 may be a DVD-player, Blu-Ray disc player, a Game station, a PC, a Media Player, a Set Top Box, a TV, etc. accessible directly D or through the home network CN, as well as content sources from air broadcast like DVB-T, SAT or from the network Cable, or DSL, be it from IPTV or over the Internet like Over The Top with Web TV applications. In this embodiment first multimedia playback device MS1 is a media player.

The audio signal amplifier ASA may be a home cinema system that amplifies the audio belonging to a multimedia content and plays the audio via speakers coupled to the audio signal amplifier. The first multimedia playback device MS1 is coupled directly to the audio signal amplifier ASA over a direct analog, digital coaxial or digital optical connection.

The second multimedia playback device MS2 is coupled directly to the audio signal Amplifier ASA over a network CN which may be a home network or packet networks such as IP networks.

The audio signal amplifier ASA comprises an Amplifying means AM that is adapted to amplify the audio signal extracted by the audio extracting means AEM and output by the multimedia playback devices MS1.

The multimedia playback device MS1 is coupled with the respective outputs, analog audio output A01, a digital coax audio output DO2 and/or a digital optical audio output OO3 to the respective inputs, analog audio input A11, a digital coax audio input D12 and/or a digital optical audio input O13 of the audio signal amplifier.

Such multimedia playback device MS1 first includes a Multimedia content Source MCS that is able to play multimedia content. This Multimedia content Source MCS may switch between different multimedia assets available in the multimedia content and additionally or alternatively may perform trick play on such multimedia assets in the multimedia content. Such multimedia content typically includes a plurality of multimedia assets. The multimedia content may be obtained from a fixed storage like a local hard-disk, other storage medium, from the internet e.g. from remote storage devices coupled to the internet or other network.

This playing of multimedia content may be under control of a control means CM included in the multimedia playback device MS1 which Control Means CM is adapted to control the playing of the multimedia content. The control means CM further is adapted to instruct the switching means ASSM to switch from the audio signal extracted from the multimedia content to the audio replacement signal before controlling the playing of the multimedia content and is adapted to instruct said switching means ASSM to switch from the audio replacement signal to the audio signal extracted from the multimedia content at receipt of an indication signal indicating presence /availability of an appropriate audio signal extracted from said multimedia content. The control means CM further includes an interface for receiving control instructions from a remote control device like a well known remote control.

The multimedia playback device MS1 further includes an Audio Extracting Means AEM for extracting an Audio signal from the Multimedia content that is provided by the Multimedia content source MCS; this Audio Extracting Means AEM may be implemented by means of an electronic chip or chipset or a program on a computer CPU.

The Audio Extracting Means AEM further is adapted to provide the control means CM with an indication signal that the audio signal extracted from the multimedia content is present.

Furthermore, the multimedia playback device MS1 comprises an audio replacement generating Means ARGM that is adapted to generate an audio replacement signal where such audio replacement signal may be a pre-recorded audio signal such as a replay of a buffered part of the audio signal extracted from the multimedia content or a prerecorded music, formatted in an appropriate format such as e.g. DD or DTS or other more recent formats.

The audio replacement signal to be played may also be a near silent sound or nature sounds (waves, rain, wind, etc.), which may be configurable by the user, as long as this guarantees sound continuity on the device audio outs.

Additionally there is a switching means ASSM for switching between the audio signal extracted from the multimedia content and the audio replacement signal where switching means outputs the signal selected by the switching means i.e. the audio signal extracted from the multimedia content and the audio replacement signal.

Finally the multimedia playback device MS1 may include a set of signal outputs like an analog audio output, a digital coax audio output AO1 and/or a digital optical DO2 audio output OO3.

The multimedia content source MCS of the multimedia playback devices MS1 is coupled with an output to an input of the Audio Extracting Means AEM that in turn is coupled with an output to an input of the switching means ASSM.

The audio replacement generating Means ARGM further is also coupled with an output to an input of the switching means ASSM. The switching means ASSM further has an output-terminal that is coupled to the respective output-terminals A01, DO2, and OO3 of the multimedia playback device MS1. The control means CM has an input-terminal that is at the same time an input terminal of the multimedia playback device MS1, and a second input that is coupled to an output of the audio extracting Means AEM. The control means CM further has an output that is coupled to an input of the switching means ASSM and a second output that is coupled to an input of the audio replacement generating means ARGM and a third output that is coupled to an input of the multimedia content source MCS.

It is to be noted that the functional structure of the second multimedia playback devices MS2 is similar to that of the first multimedia playback devices MS1.

In order to explain one particular incarnation and the execution of the present invention it is supposed that a first multimedia playback device MS1 is connected to an audio signal amplifier e.g. being a home cinema system.

In a first example a first multimedia content is currently played, where this multimedia content e.g. may be a video asset like a movie with corresponding audio or an audio asset like a soundtrack.

First a trick play command like "fast forward" or "rewind" is sent from a remote control RCU towards the multimedia playback device MS1 for skipping a part of the asset or reviewing the asset. Particularly if "fast forward" or "rewind" commands are used at speeds that do not support accelerated sound playback, or alternatively if a user is switching from content viewing to menu and from menu to content viewing or browsing through menus the sound is interrupted in the prior art situation.

In more detail, this is troublesome because the audio signal amplifier home cinema amplifier usually has several audio inputs for the same external device, say for example for an external DVD player: it usually has audio analog stereo in, audio digital coax in, and audio digital optical in. When the amplifier is inactive or switches the first time to a new external source, it first looks for a sound on the digital optical in; if there is none it searches for sound on the digital coax in, then on the analog in. This takes 1-2 seconds. Suppose there is sound found on the digital coax in. Next the amplifier needs to analyze the audio stream and identify the encoding format, e.g. DD or DTS. It then activates the right decoder and decodes the sound. This takes 1-2 seconds again. With today's external players there is no sound continuity guaranteed and so as soon as the user browses through content, uses trick play, or browses between contents on the same device, the sound is interrupted and the amplifier goes again in idle mode.

Furthermore it is not the expectation that a single sound format is to be used at home as there are a number of new formats coming on the market that will even worsen the situation (e.g. MPEG sound format AAC, new Dolby Digital formats such as DD-HD, new DTS formats such as DTS-HD and DTS-Lossless, etc.)

In order to overcome this problem of such a prior art system, in the present invention, at receipt of a trick play command, the control means CM first generates a control signal destined to the audio signal switching means ASSM, to instruct the audio signal switching means ASSM to switch from the audio signal that is currently extracted from the multimedia content currently playing to the audio replacement signal e.g. being a near silent sound or nature sounds like waves, rain, wind, etc. before actually controlling the playing of the multimedia content (fast forward playing or rewind of the current content played).

The audio signal switching means ASSM, at switch from the audio signal extracted from the multimedia content to the audio replacement signal, where the switching takes place before the interrupted playback of the received multimedia content signal makes this audio replacement signal available at the respective outputs A01, DO2 and OO3 of the multimedia playback device MS1 for playing out either the audio signal extracted from the multimedia content or the audio replacement signal.

Hence the audio play back is switched from the extracted audio to the replacement signal and subsequently the actual "fast forward" or the "rewind" control signal is forwarded towards the multimedia content source MCS that based on this signal starts moving fast forward (or backwards) through the played out asset.

If the desired location of the multimedia content is reached (after fast forward or rewinding the content), the playback is resumed after the subsequent "play" command received from the remote control RCU is received at the control means CM that subsequently instructs the multimedia content source MCS to continue the playback at the chosen location. The Audio Extracting Means AEM extracts the Audio signal from the Multimedia content provided by the Multimedia content source MCS that resumes playback from the chosen location. If the extracted audio signal is stabilized, the Audio Extracting Means additionally generates an indication signal and provides the control means CM with the indication signal for notifying that the audio signal extracted from the multimedia content is present. At receipt of this_indication signal at the control means CM, the control means subsequently instructs the audio signal switching means ASSM to switch back from the audio replacement signal to the audio signal extracted from the multimedia content that resumed playback. The audio signal switching means ASSM at switch back to the audio signal extracted from the multimedia content after resumed playback of the received multimedia content signal makes this audio signal available at the respective outputs A01, DO2 and OO3 of the multimedia playback device MS1.

Due to this continuous stream the audio signal amplifier ASA, i.e. the home cinema amplifier, connected to the playback device's audio outputs via at least one of its audio in for that external device, will remain in the same input mode with the same audio decoder active, thereby ensuring sound continuity.

The replacement signal to be played can be a near silent sound, music, even a buffered part of the audio signal extracted from the multimedia content or nature sounds like waves, rain, wind, etc., configurable by the user or based on a user profile and status, as long as this guarantees sound continuity on the device audio outs.

Additionally the audio replacement generating Means ARGM is also coupled with an input to an output of the audio extracting means AEM for receiving the audio signal extracted from the multimedia content. This allows the audio replacement generating Means ARGM to detect the audio format of the audio signal extracted from the multimedia content and to store in a built-in buffer/memory a part of the audio signal extracted from the multimedia content.

The sound content of the audio replacement signal is configurable: e.g. the audio replacement signal includes background nature sounds selection (wind, waves, etc.), a near silent sound, music, etc. The sound format of the audio replacement signal can be e.g. AAC or Dolby Digital or DTS, and can be selected automatically by the audio replacement generating Means ARGM by detecting the audio format of the audio signal extracted from the multimedia content.

The proposed solution for the home media device performing video content playback is for the device to react to user trick play commands by first switching the sound output on the device's audio outputs from the source sound to a pre-recorded "pause" sound, before the trick play command is actually being performed, and resume the sound from the original source as soon as it is available again. This is particularly true for times when the user uses fast forward or "rewind" commands at speeds that do not support accelerated sound playback, or when the user is switching from content viewing to menu and from menu to content viewing or browsing through menus. Note that menus also have sounds that can be played back but the playing device must still ensure that there is no sound interruption on the audio outputs (analog, digital coax and digital optical).

The device can perform this task using pre-recorded sounds in various formats such as AAC from MPEG videos but also Dolby Digital (any version) and DTS (any version). It is important to note that it is not necessary for the device to have a built in DD or DTS encoder or even decoder to be able to output such sound on its audio out because the sound is prerecorded and can be streamed out as is in its original format. This is important as many manufacturers do reduce cost by avoiding unnecessary cost, for example by directly streaming DD or DTS sound out without internally decoding it. This is more frequently done with DTS.

Also the sound continuity can be ensured even in the DD or DTS cases because these sound formats do not overlap between video frames and so it is very easy to switch from one DD or DTS source to another. When the original sound is in AAC, DD or DTS format, the pause sound to be switched to will be in the same format, being AAC, DD or DTS, respectively.

Alternatively, instead of trick play commands a switch can be made from a first multimedia asset to a second multimedia asset. In switching from the first multimedia asset to the second multimedia asset, there is an audio signal discontinuity as well. The present invention is equally applicable in case of switch from a first multimedia asset to a second multimedia asset as in case of trick play.

Examples of Multimedia playback devices are - DVD and BluRay players (menus and content browsing); Game stations able to play disks, PC (sound sent out continuously as long as the media player application is open); a Media Player (from networked devices, external hard drives, or internal hard drive); STB (trick play with IPTV or cable); TV (for Internet connected TVs);

Finally, it is also possible for Web TV sites over the Internet to provide a continuous sound stream. This can also be very comfortable for people using Web TVs even without an external amplifier. In this specific case, instead of the method being implemented on the playback device, the Web site itself could ensure that a continuous sound stream is provided to the TV client. This can also be based on user preferences (set by user or by learning from previous settings). As such the Web TV site can provide a continuous DD or DTS stream. Again this is feasible technically because these sound formats do not overlap between video frames.

AAC in MPEG may require some more effort to prevent sound discontinuity as AAC sound may overlap between video frames. It is somewhat less relevant for Home Cinema households who will expect DD5.1 as a minimum.

Optionally, the sound format information as metadata separately could be sent to the amplifier to support and simplify auto-detection.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for playing multimedia content from a Multimedia Content Source (MCS), said method comprising the steps of:
a. extracting an Audio signal from said Multimedia content provided by said Multimedia content source (MCS); and
b. amplifying said audio signal extracted by said extracting means; and
c. controlling_said playing of said multimedia content, **CHARACTERISED IN THAT** said method further comprises the steps of:
d. generating an audio replacement signal; and
e. switching between said audio signal extracted from said multimedia content and said audio replacement signal for playing out a selected audio signal being said audio signal extracted from said multimedia content or said audio replacement signal; and
**in that** said step of controlling further comprises instructing said switching means to switch from said audio signal extracted from said multimedia content to said audio replacement signal before controlling said playing of said multimedia content.

2. Method for playing multimedia content according to claim 1, **CHARACTERISED IN THAT** said method further comprises the steps of:
f. said Extracting Means providing said control means with an indication signal that said audio signal extracted from said multimedia content is present; and
g. said control means instructing said switching means to switch from said audio replacement signal to said audio signal extracted from said multimedia content at receipt of said indication signal.

3. Method according to claim 1 or 2, **CHARACTERISED IN THAT** said step of controlling said playing of said multimedia content may include executing trick-play on said multimedia content and switching between a plurality of multimedia contents.

4. Method according to any of claims 1 to 3, **CHARACTERISED IN THAT** said method further comprises the step of defining audio signal content of said audio replacement signal.

5. System for playing multimedia content from a Multimedia Content Source (MCS), said system comprising:
a. an Audio Extracting Means (AEM) for extracting an Audio signal from said Multimedia content provided by said Multimedia content source (MCS); and
b. an Amplifying means (AM) for amplifying said audio signal extracted by said audio extracting means (AEM); and
c. a Control Means (CM) for controlling said playing of said multimedia content, **CHARACTERISED IN THAT** said Multimedia content playback system further comprises:
d. an audio replacement generating Means (ARGM) for generating an audio replacement signal; and
e. an audio signal switching means (ASSM) for switching between said audio signal extracted from said multimedia content and said audio replacement signal and for subsequent playing out a selected audio signal being said audio signal extracted from said multimedia content or said audio replacement signal; and **in that** said control means (CM) further is adapted to instruct said audio switching means (ASSM) to switch from said audio signal extracted from said multimedia content to said audio replacement signal before controlling said playing of said multimedia content.

6. System according to claim 5, **CHARACTERISED IN THAT** said Audio Extracting Means (AEM) further is adapted to provide said control means (CM) with an indication signal that said audio signal extracted from said multimedia content is present;
and **in that** said control means (CM) is further adapted to instruct said audio signal switching means (ASSM) to switch from said audio replacement signal to said audio signal extracted from said multimedia content at receipt of said indication signal.

7. System according to claim 5 or 6, **CHARACTERISED IN THAT** said control means (CM) is adapted to execute trick-play on said multimedia content and is further adapted to switch between a plurality of multimedia contents.

8. System according to any of claim 5 to 7, **CHARACTERISED IN THAT** said system further comprises means for defining audio signal content of said audio replacement signal.

9. Multimedia playback module (MPM) for use in a system according to any of claims 5 to 8, **CHARACTERISED IN THAT** Multimedia playback module (MPM) comprises:
a. an Audio Extracting Means (AEM) for extracting an Audio signal from said Multimedia content provided (by said Multimedia content source (MCS));
b. an audio replacement generating Means (ARGM) for generating a audio replacement signal;
c. an audio signal switching means (ASSM), coupled with an input to an output of said extracting means (AEM) and coupled with a further input to an output of said audio replacement generating Means (ARGM), for switching between said audio signal extracted from said multimedia content and said audio replacement signal for playing out a selected audio signal being said audio signal extracted from said multimedia content or said audio replacement signal; and
d. a control means (CM) adapted to instruct said audio signal switching means (ASSM) to switch from said audio signal extracted from said multimedia content to said audio replacement signal before controlling said playing of said multimedia content.

10. Multimedia playback module (MPM) according to claim 9, **CHARACTERISED IN THAT** said Audio Extracting Means (AEM) further is adapted to provide said control means (CM) with an indication signal that said audio signal extracted from said multimedia content is present;
and **in that** said control means (CM) is further adapted to instruct said audio signal switching means (ASSM) to switch from said audio replacement signal to said audio signal extracted from said multimedia content at receipt of said indication signal.

11. Multimedia playback module (MPM) according to claim 9, **CHARACTERISED IN THAT** said controlling means (CM) is adapted to execute trick-play on said multimedia content and is further adapted to switch between a plurality of multimedia contents.

12. Multimedia playback module (MPM) according to claim 9, **CHARACTERISED IN THAT** said Multimedia playback module (MPM) further comprises means for defining audio signal content of said audio replacement signal.

13. Play back device including a Multimedia playback module (MPM) according to any of claims 9 to 11.

14. Internet Website including a Multimedia playback module (MPM) according to any of claims 9 to 11.
